# EUROPEAN PATENT APPLICATION

(11) **EP 2 905 603 A1**
(43) Date of publication of application: **12.08.2015**
(21) Application number: 14000486.2
(22) Date of filing: 11.02.2014
(51) Int. Cl.: G01N 21/27

(54) **Analytical Standard Composition**

(71) Applicant: Parlar, Harun, 85406 Zolling (DE)
(72) Inventor: Parlar, Harun, 85406 Zolling (DE)
(74) Representative: Hartz, Nikolai

(57) **Abstract**

Analytical standard (10) comprising
(i) one or more first containers (11) containing a first solution (21) of one or more analytes, wherein the one or more first containers (11) shield the first solution (21) against light of a wavelength in the range of less than 500 nm;
(ii) a second container (12) containing a second solution (22) of the one or more analytes and a concentration of one or more decomposition accelerators which is higher than the concentration of the same one or more decomposition accelerators in the first solution.

## Description

### Field of the Invention

The present invention relates to an analytical standard. Furthermore, the present invention relates to processes for the preparation of an analytical standard of the present invention. Finally, the present invention relates to an analytical method using as a reference an analytical standard of the present invention.

The analytical standard of the present invention allows validation of the accuracy of a quantitative analytical method for ensuring that the subsequent measurements in routine analysis will be close enough to the unknown true value of the content of one or more analytes in a sample, whereby the accuracy refers to the closeness of agreement between the value which is accepted either as a conventional true value or an accepted reference value, and the value found.

### Background of the Invention

Analytical standards are materials containing a known concentration of an analyte. Analytical standards provide a reference to determine unknown concentrations or to calibrate analytical instruments.

An analytical standard may be a primary standard or a secondary standard. A primary standard is a reagent that is extremely pure, stable, has no waters of hydration, and has a high molecular weight. A secondary standard is a standard that is prepared in the laboratory for a specific analysis. A secondary standard is usually standardized against a primary standard.

However, the one or more analytes in an analytical standard may be subject to decomposition in the analytical standard composition. Moreover, one or more analytes in an analytical standard may be subject to adsorption to the inner wall of the container in which the analytical standard composition is stored.

In case an analytical standard composition is provided as a mixture of analytes, the decomposition and/or adsorption of each analyte may progress at different rates. Therefore, the practitioner requires a method for quality controlling the analytical standard composition in order to validate the accuracy of a quantitative analytical method using the analytical standard composition.

Conventionally, the practitioner has to standardize each analyte of the analytical standard against a primary standard. However, in case a primary standard is not available, the accuracy of the analytical method cannot be determined. Even if a primary standard is available, the time and effort for validating the analytical standard defeats the purpose of using the secondary standard.

Conventionally, analytical standards are provided with an expiration date after which the analytical standard is assumed to be deteriorated. However, depending on the storage of the analytical standard, the assumption may be erroneous since the analytical standard is not yet deteriorated. On the other hand, the analytical standard might have already deteriorated prior to the expiration date due to unexpected events during storage or use. Therefore, the conventional quality control of an analytical standard may give rise to errors due to the reliance on a standard expiration date.

### Summary of the Invention

It is a problem of the present invention to provide an analytical standard which allows the validation of the accuracy of a quantitative analytical method for ensuring that the subsequent measurements in routine analysis will be close enough to the unknown true value of the content of one or more analytes in a sample without using an additional standardization of the analytical standard against a primary standard and independent from the assumptions made by using an expiration date.

It is a further problem of the present invention to provide a process for the preparation of an analytical standard.

Finally, it is a problem of the present invention to provide an analytical method using as a reference an analytical standard which may be validated by using the analytical standard.

According to a first aspect, the present invention provides an analytical standard comprising
(i) one or more first containers containing a first solution of one or more analytes, wherein the one or more first containers shield the first solution against light of a wavelength in the range of less than 500 nm;
(ii) a second container containing a second solution of the one or more analytes and a concentration of one or more decomposition accelerators which is higher than the concentration of the same one or more decomposition accelerators in the fist solution.

According to a second aspect, the present invention provides a process for the preparation of an analytical standard, which process comprises
(i) dissolving one or more analytes in a solvent or solvent mixture for preparing a first solution;
(ii) introducing the first solution into one or more first containers shielding the first solution against light of a wavelength in the range of less than 500 nm;
(iii) dissolving the one or more analytes in a solvent or solvent mixture for preparing a second solution; and
(iv) introducing the second solution into a second container, whereby the second solution contains one or more decomposition accelerators for the one or more analytes.

According to a third aspect, the present invention provides a process for the preparation of an analytical standard, which process comprises
(a) dissolving one or more analytes in a solvent or solvent mixture for obtaining a first solution;
(b) introducing a first portion of the first solution into one or more first containers shielding the first solution against light of a wavelength in the range of less than 500 nm;
(c) introducing one or more decomposition accelerators for the one or more analytes into a second portion of the first solution for providing a second solution, and
(d) introducing the second solution into a second container.

According to a fourth aspect, the present invention provides an analytical method using as a reference an analytical standard defined in the first aspect or obtainable according to any one of second or third aspects, for the determination of unknown concentrations of the one or more analytes or to calibrate analytical instruments based on the one or more analytes, which analytical method comprises a step of assessing the quality of the analytical standard by a comparison of the analysis results of the content of a first container of the analytical standard with the analysis results of the content of the second container of the analytical standard.

The present invention is based on the concept of identifying the decomposition of one or more analytes of an analytical standard with reference to a reference composition containing the same one or more analytes under conditions wherein the decomposition rate of the analyte is different from the decomposition rate of the analyte in the analytical standard. According to a preferred embodiment, the present invention embodies the concept of identifying the adsorption of one or more analytes of an analytical standard with reference to a reference composition containing the same one or more analytes under conditions wherein the adsorption rate of the analyte is different from the adsorption rate of the analyte in the analytical standard.

### Brief Description of the Figures

Fig. 1 shows a schematic side view of a first embodiment of the analytical standard of the present invention which comprises a first container and a second container.
Fig. 2 shows a schematic side view of a second embodiment of the analytical standard of the present invention which comprises a first container and a second container which containers are combined in a housing.
Fig. 3 shows a schematic side view of a third embodiment of the analytical standard of the present invention which comprises five first containers and a second container.
Fig. 4 shows a schematic top view of a fourth embodiment of the analytical standard of the present invention which comprises five first containers and a second container, which containers are combined in a housing.
Fig. 5 shows a schematic side view of a fifth embodiment of the analytical standard of the present invention which comprises a first container and a second container, whereby the second container further comprises a particulate material having adsorption properties for one or more analytes in the mixture.
Fig. 6 shows a schematic side view of a sixth embodiment of the analytical standard of the present invention which comprises a first container and a second container which containers are combined in a housing, whereby the second container further comprises a particulate material having adsorption properties for one or more analytes in the mixture.
Fig. 7 shows a schematic side view of a seventh embodiment of the analytical standard of the present invention which comprises five first containers and a second container, whereby the second container further comprises a particulate material having adsorption properties for one or more analytes in the mixture.

### Detailed Description

The present invention provides an analytical standard. The analytic standard comprises a solution of one or more analytes having a predetermined concentration. The concentration may be in a range of 0.1 ppm to 100.000 ppm, preferably from 10 ppm to 50.000 ppm, more preferably from 100 ppm to 30.000 ppm.

The analyte may be a single analyte or a mixture of two or more different analytes. There is no particular limitation to the type of analyte which may be used for the analytic standard of the present invention. The analytes may be selected from natural products and synthetic compounds. Synthetic compounds may be, for example pesticides or pharmaceutical agents.

A specific example of a mixture of natural products is an analytical standard for analyzing native oil of Rosmarinus officialis. Accordingly, the analytes may comprise one or more of carnosol, carnosic acid, carnosic acid methyl ester, and rosmarinic acid. Moreover, specific example of a mixture of natural products is an analytical standard for analyzing flavor of Rosmarinus officialis. Accordingly, the analytes may comprise one or more of alpha-pinene, camphene, beta-pinene, myrcene, p-cymol, limonene, 1,8-cineole, cis-sabinene hydrate, linalool, camphor, borneol, terpinen-4ol, alpha-terpineol, verbenon, bornyl acetate, E-beta- caryophyllene, alpha humulene, and caryophyllenoxide.

Specific examples of pesticides are as follows: 2,4-D, acephate, bifenthrin, capsaicin, chlorpyrifos, citronella (oil of citronella), creosote, cyproconazole, d-phenothrin, DEET, deltamethrin, diazinon, dicamba, fipronil, glyphosate, imidacloprid, malathion, methoprene, neem oil, paradichlorobenzene, pentachlorophenol, permethrin, picaridin, propiconazole, and resmethrin.

The solvents of the analytes are not particularly limited. Suitable solvents may be selected from water and organic solvents. Examples of the organic solvents are hydrocarbons, halogenated hydrocarbons, alcohols, ketones, ethers, esters, amides and amines. Hydrocarbon solvents may be selected from pentane, hexane, cyclohexane, heptane, octane, benzene, toluene, o-, m-, and p-xylene. Halogenated hydrocarbon solvents may be selected from chloroform, dichlormethane, and carbon tetrachloride. Alcohols may be selected from methanol, ethanol, n-propanol, isopropanol, n-butanol, and tert.-butanol. Ketones may be selected from acetone and methyl ethyl ketone. Ethers may be selected from diethyl ether and tetrahydrofurane. Esters may be selected from methyl acetate and ethyl acetate. Amides may be selected from N-methyl-2-pyrrolidone and dimethyl formamide. Amines may be selected from piperidine and morpholine.

The analytical standard comprises one or more first containers. The material of the containers is not particularly limited as long as it is inert with regard to the analyte solution. Suitable materials may be selected from glass, metals, alloys and resins, whereby glass is preferred. The capacity of the containers is not particularly limited and may be selected from 0.5 ml to 1000 ml, more preferably 1 ml to 20 ml.

The one or more first containers contain a first solution of one or more analytes. The one or more first containers shield the first solution against light of a wavelength in the range of less than 500 nm. Accordingly, the material of the container may contain one or more compounds providing light shielding properties. In the case of glass, metal atoms may be contained in the glass for absorbing light of a wavelength in the range of less than 500 nm. Accordingly, the glass is preferably amber glass. The containers are preferably closed with a septum. The septum may be made of any suitable material which is inert towards the content of the container. Suitable materials may be selected from PTFE and silicones.

Depending on the type of the analyte, adsorption of the analyte to the surface of the inner wall of the one or more first containers may occur. Accordingly, the concentration of the one or more analyte adsorbing to the inner wall of the first container decreases in the bulk of the mixture even though decomposition products are not detectable.

The analytical standard comprises a second container. The material of the second containers is not particularly limited as long as it is inert with regard to the analyte solution. It is not necessary that the second container shields the second solution against light of a wavelength in the range of less than 500 nm. According to a preferred embodiment, the second container does not shield the second solution against light of a wavelength in the range of less than 500 nm. Suitable materials may be selected from glass, metals, alloys and resins, whereby glass is preferred. The capacity of the containers is not particularly limited and may be selected from 0.5 ml to 1000 ml, more preferably 1 ml to 20 ml. Preferably, the capacity of the second container and the capacity of the one or more first containers are the same. The second container contains a second solution of the one or more analytes. The second solution represents an analytical reference standard. The analytical reference standard contains the one or more analytes in a predetermined concentration. The concentration of the one or more analytes in the analytical reference standard may be in a range of 0.1 ppm to 10.000 ppm. Preferably, the concentration of the one or more analytes in the analytical reference standard is the same as the concentration of the one or more analytes in the analytical standard contained in the one or more first containers.

The second solution further contains a concentration of one or more decomposition accelerators. A decomposition accelerator is a compound which is reactive with the one or more analytes present in the analytical standard and the analytical reference standard. Preferably, the decomposition accelerator is a compound which is contained in the first solution or which potentially contaminates the first solution during the use of the analytical standard. Oxygen is an example for a decomposition accelerator. Oxygen may oxidize organic compounds contained as analytes in the first solution. Accordingly, the presence of oxygen is avoided by elimination of oxygen during the preparation of the first solution. Preferably, the first solution is saturated with an inert gas, preferably selected from nitrogen and a noble gas. However, during the use of the analytical standard, oxygen present in air may be introduced into the first solution. Accordingly, the second solution may contain a concentration of oxygen.

Decomposition accelerators may be selected from oxygen, water, protic acids, bases, metal ions and organic compounds. Preferably, the decomposition accelerators are selected from oxygen, metal ions, protic acids, bases, and water. The decomposition accelerators may decompose the one or more analytes as a reactant or as a catalyst. The metal ions may be selected from iron, zinc, copper, nickel, cobalt, titanium, vanadium, chromium, and manganese. Organic compounds may be selected from decomposition products which are autocatalytic in the decomposition of the one or more analytes. Examples of the decomposition products are acids formed during acid catalysed decomposition of the one or more analytes.

The concentration of the decomposition accelerators in the second solution is not particularly limited provided that the concentration of the decomposition accelerator in the second solution is higher than the concentration of the decomposition accelerator in the first solution. Preferably, the concentration is selected so that the decomposition of the one or more analytes in the second solution is negligible prior to the expiration date of the analytical standard. The expiration date of the analytical standard may be selected from 4 to 24 month. In case of oxygen, it is preferred that the second solution is saturated with oxygen.

The second containers are preferably closed with a septum. The septum may be made of any suitable material which is inert towards the content of the container. Suitable materials may be selected from PTFE and silicones. Preferably, the second contained is closed with the same type of septum as the first container.

According to a preferred embodiment, the analytical standard of the present invention comprises a plurality of first containers, preferably 3 to 10 first containers.

The containers may be combined in a housing. The housing may be adapted to present the septum of each of the containers for convenient access to the first and second solutions contained in the first and second containers. Moreover, the housing may be used to ensure that the first solution is stored under conditions which are the same as the storage conditions of the second solution with regard to the temperature and to ensure that the storage conditions of the first solution are not such that the decomposition of the analytes in the first solution proceeds more quickly than the decomposition of the analytes in the second solution.

In case the concentration of the one or more analyte decreases due to adsorbing to the inner wall of the first container decreases in the bulk of the mixture even though decomposition products are not detectable, the second container may further contain a particulate material having surface adsorption properties of the one or more analytes which are similar to the adsorption properties of the surface of the inner wall of the first container. In a more preferred embodiment, the particulate material and the material of the inner wall of the first container are the same. Preferably, the material is a glass powder. The surface area ratio of the particulate material to the surface of the inner wall of the first container is preferably in the range of (surface of particulate material) : surface of the inner wall of the first container exposed to the mixture of analytes) of from 1:1 to 1000 :1, in particular 1:10 to 1:200, whereby the surface area may be measured by the BET method.

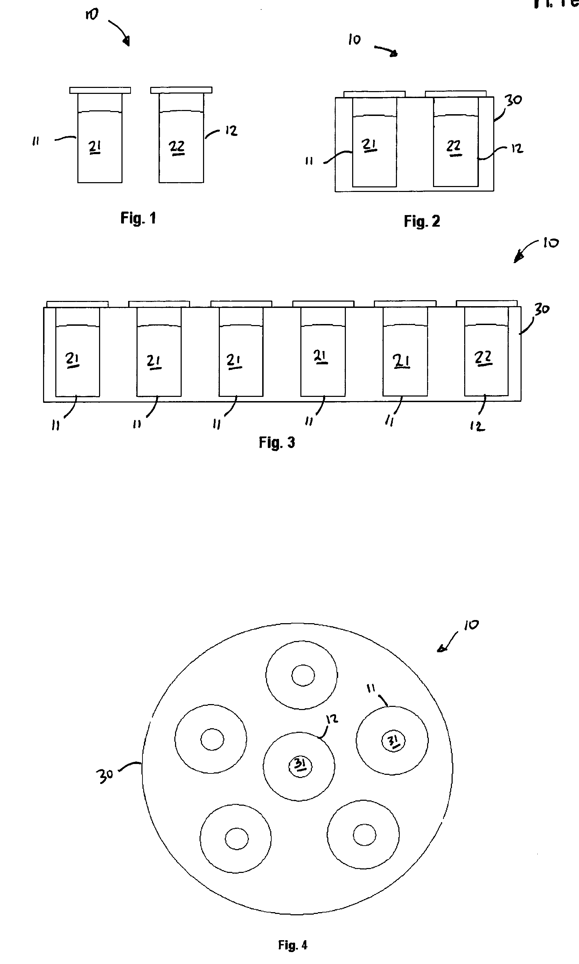

The present invention will now be further explained with reference to the figures. Fig. 1 shows a schematic side view of a first embodiment of the analytical standard of the present invention which comprises a first container 11 and a second container 12.

Fig. 2 shows a schematic side view of a second embodiment of the analytical standard of the present invention which comprises a first container 11 and a second container 12, which containers are combined in a housing 30.

Fig. 3 shows a schematic side view of a third embodiment of the analytical standard of the present invention which comprises five first containers 11 and a second container 12.

Fig. 4 shows a schematic top view of a fourth embodiment of the analytical standard of the present invention which comprises five first containers 11 and a second container 12, which containers are combined in a housing 30 so that the second container is in the center of a circular arrangement of the first containers.

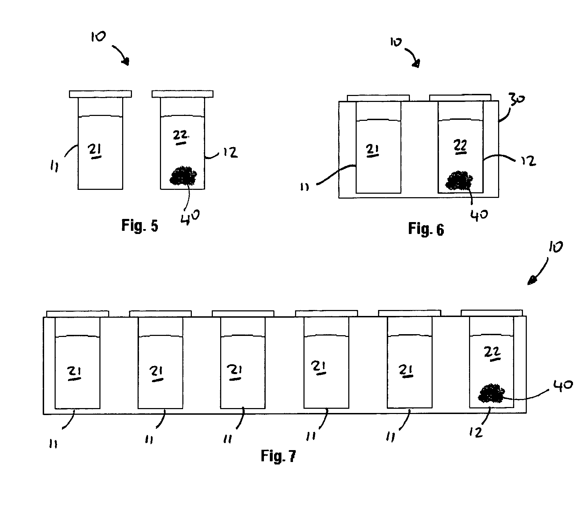

Fig. 5 shows a schematic side view of a fifth embodiment of the analytical standard of the present invention which is similar to the first embodiment shown in Fig 1. According to the fifth embodiment, a particulate material 40 is contained in the second container 12.

Fig. 6 shows a schematic side view of a sixth embodiment of the analytical standard of the present invention which is similar to the first embodiment shown in Fig 2. According to the sixth embodiment, a particulate material 40 is contained in the second container 12.

Fig. 7 shows a schematic side view of a seventh embodiment of the analytical standard of the present invention which is similar to the first embodiment shown in Fig 3. According to the seventh embodiment, a particulate material 40 is contained in the second container 12.

The analytical standard may be prepared according to the following processes.

According to a first process for the preparation of an analytical standard of the present invention, the process comprises a step of dissolving one or more analytes in a solvent or solvent mixture for preparing a first solution.

The process of the first embodiment further comprises a step of introducing the first solution into one or more first containers shielding the first solution against light of a wavelength in the range of less than 500 nm.

The process of the first embodiment further comprises a step dissolving the one or more analytes in a solvent or solvent mixture for preparing a second solution.

Finally, the process of the first embodiment further comprises a step introducing the second solution into a second container, whereby the second solution contains one or more decomposition accelerators for the one or more analytes.

Preferably, the one or more decomposition accelerators for the one or more analytes are added to the solvent or solvent mixture prior to the dissolution of the one or more analytes.

Preferably, a particulate material having surface adsorption properties of the one or more analytes which are similar to the adsorption properties of the surface of the inner wall of the first container is added to the second container. Preferably, the particulate material and the material of the inner wall of the first container are the same. Preferably, the material is glass.

According to a second process for the preparation of an analytical standard of the present invention, the process comprises a step of dissolving one or more analytes in a solvent or solvent mixture for obtaining a first solution.

The process of the second embodiment further comprises a step of introducing a first portion of the first solution into one or more first containers shielding the first solution against light of a wavelength in the range of less than 500 nm.

The process of the second embodiment further comprises a step of introducing one or more decomposition accelerators for the one or more analytes into a second portion of the first solution for providing a second solution.

Preferably, a particulate material having surface adsorption properties of the one or more analytes which are similar to the adsorption properties of the surface of the inner wall of the first container is added to the second container. Preferably, the particulate material and the material of the inner wall of the first container are the same. Preferably, the material is glass.

Finally, the process of the second embodiment further comprises a step of introducing the second solution into a second container.

Preferably, the process according to the second embodiment further comprises sealing the one or more first containers and the second container with a septum.

Moreover, the present invention provides an analytical method using as a reference an analytical standard of the invention. The analytical standard may be as defined in above. The analytical standard may also be obtainable according to the processes according to the invention.

The analytical method may be used for the determination of unknown concentrations of the one or more analytes or to calibrate analytical instruments based on the one or more analytes.

The analytical method comprises a step of assessing the quality of the analytical standard by a comparison of the analysis results of the content of a first container of the analytical standard with the analysis results of the content of the second container of the analytical standard.

Preferably, the analysis results are obtained by using a chromatographic method.

Moreover, according to a preferred embodiment, a first container is discarded when the comparison results in a difference between the analytical results exceeding a threshold.

According to a further preferred embodiment, unknown concentrations of a plurality of analytes in a sample are determined.

### List of reference numerals:

| | |
|---|---|
| analytical standard | : 10 |
| first container | : 11 |
| first solution | : 21 |
| second container | : 12 |
| second solution | : 22 |
| housing | : 30 |
| septum | : 31 |
| particulate material | : 40 |

## Claims

1. Analytical standard (10) comprising
(i) one or more first containers (10) containing a first solution (21) of one or more analytes, wherein the one or more first containers (10) shield the first solution (21) against light of a wavelength in the range of less than 500 nm;
(ii) a second container (12) containing a second solution (22) of the one or more analytes and a concentration of one or more decomposition accelerators which is higher than the concentration of the same one or more decomposition accelerators in the fist solution.

2. The analytical standard (10) according to claim 1, wherein the decomposition accelerators are selected from oxygen, metal ions, protic acids, bases, and water.

3. The analytical standard (10) of claim 2, wherein the decomposition accelerator is oxygen.

4. The analytical standard (10) according to any one of the preceding claims wherein the first and second containers (11, 12) are sealed with a septum (31).

5. The analytical standard (10) according to any one of the preceding claims wherein the first solution (21) is saturated with an inert gas, preferably selected from nitrogen and a noble gas.

6. The analytical standard (10) according to any one of the preceding claims which comprises a plurality of first containers (10), preferably 3 to 10 first containers (10).

7. The analytical standard according to any one of the preceding claims, wherein the second container further contains a particulate material having surface adsorption properties of the one or more analytes which are similar to the adsorption properties of the surface of the inner wall of the first container.

8. Process for the preparation of an analytical standard, which process comprises
(i) dissolving one or more analytes in a solvent or solvent mixture for preparing a first solution;
(ii) introducing the first solution (21) into one or more first containers shielding the first solution (21) against light of a wavelength in the range of less than 500 nm;
(iii) dissolving the one or more analytes in a solvent or solvent mixture for preparing a second solution (22) ; and
(iv) introducing the second solution (22) into a second container (12), whereby the second solution (22) contains one or more decomposition accelerators for the one or more analytes.

9. The process according to claim 8 wherein the one or more decomposition accelerators for the one or more analytes are added to the solvent or solvent mixture prior to the dissolution of the one or more analytes.

10. Process for the preparation of an analytical standard, which process comprises
(a) dissolving one or more analytes in a solvent or solvent mixture for obtaining a first solution;
(b) introducing a first portion of the first solution (21) into one or more first containers (11) shielding the first solution (21) against light of a wavelength in the range of less than 500 nm;
(c) introducing one or more decomposition accelerators for the one or more analytes into a second portion of the first solution (21) for providing a second solution (22), and
(d) introducing the second solution (22) into a second container (12).

11. The process according to any one of claims 8 to 10, which further comprises sealing the one or more first containers (11) and the second container (12) with a septum (31).

12. Analytical method using as a reference an Analytical standard (10) defined in any one of claims 1 to 8 or obtainable according to any one of claims 9 to 11, for the determination of unknown concentrations of the one or more analytes or to calibrate analytical instruments based on the one or more analytes, which analytical method comprises a step of assessing the quality of the Analytical standard (10) by a comparison of the analysis results of the content of a first container of the Analytical standard (10) with the analysis results of the content of the second container (12) of the analytical standard.

13. The analytical method according to claim 12, wherein the analysis results are obtained by using a chromatographic method.

14. The analytical method according to claim 12 or 13, wherein a first container is discarded when the comparison results in a difference between the analytical results exceeding a threshold.

15. The analytical method according to any one of claims 12 to 14, wherein unknown concentrations of a plurality of analytes in a sample are determined.
